# EUROPEAN PATENT APPLICATION

(11) **EP 4 827 022 A1**
(43) Date of publication of application: **21.10.2026**
(21) Application number: 24914961.8
(22) Date of filing: 22.10.2024
(51) Int. Cl.: H04L 1/00, H04L 27/26

(54) **DATA TRANSMISSION METHOD, WIRELESS COMMUNICATION DEVICE, STORAGE MEDIUM AND PROGRAM PRODUCT**

(30) Priority: 02.01.2024 CN 202410014000
(71) Applicant: ZTE CORPORATION, Shenzhen, Guangdong 518057 (CN)
(72) Inventor: XIN, Yu, Shenzhen, Guangdong 518057 (CN); BAO, Tong, Shenzhen, Guangdong 518057 (CN); HUA, Jian, Shenzhen, Guangdong 518057 (CN)
(74) Representative: Savi, Massimiliano
(86) International application number: PCT/CN2024/126403
(87) International publication number: WO 2025/145744

(57) **Abstract**

Provided in the embodiments of the present application are a data transmission method, a wireless communication device, a storage medium and a program product. The method comprises: acquiring a first data sequence and a second data sequence, wherein the frequency domain bandwidths allocated to the first data sequence and the second data sequence are different; adding a first head sequence before the first data sequence and adding a first tail sequence after the first data sequence, so as to form a first target data sequence; adding a second head sequence before the second data sequence and adding a second tail sequence after the second data sequence, so as to form a second target data sequence; and sending the first target data sequence and the second target data sequence, wherein the data length of the first tail sequence and the data length of the second tail sequence are different, and the data length of the first head sequence and the data length of the second head sequence are the same.

## Description

### CROSS-REFERENCE TO RELATED APPLICATION

This application is filed on the basis of the Chinese patent application No. 202410014000.0 filed January 2, 2024 to the CNIPA, entitled "DATA TRANSMISSION METHOD, WIRELESS COMMUNICATION DEVICE, STORAGE MEDIUM AND PROGRAM PRODUCT", and claims priority of the Chinese patent application. The entire contents of the above application are incorporated herein by reference.

### TECHNICAL FIELD

The present disclosure relates to the field of communication, and in particular to a method for data transmission, a wireless communication device, a storage medium, and a program product.

### BACKGROUND

Fifth-generation wireless systems (5G) New Radio (NR) support data transmission using two technologies: Cyclic Prefix Orthogonal Frequency Division Multiplexing (CP-OFDM) and Discrete Fourier Transform-spread Orthogonal Frequency Division Multiplexing (DFT-s-OFDM). During data transmission, the same Cyclic Prefix (CP) is often employed for users associated with the same cell to eliminate intersymbol interference;. However, the CP takes up some time-frequency resources, which reduces spectral efficiency. Hence, it is important to design a scheme for data transmission with reduced CP overhead to improve spectral efficiency.

### SUMMARY

The following is a summary of the subject matter described herein. This summary is not intended to limit the scope of protection of the claims.

Provided are a method for data transmission, a wireless communication device, a storage medium, and a computer program product in various embodiments of the present disclosure.

According to a first aspect, a method for data transmission is provided. The method includes: acquiring a first data sequence and a second data sequence, where the first data sequence and the second data sequence are allocated with different frequency domain bandwidths; adding a first header sequence to the leading end of the first data sequence, and adding a first trailer sequence to the trailing end of the first data sequence to form a first target data sequence; adding a second header sequence to the leading end of the second data sequence, and adding a second trailer sequence to the trailing end of the second data sequence to form a second target data sequence; and transmitting the first target data sequence and the second target data sequence; where the first trailer sequence and the second trailer sequence have different data lengths, and the first header sequence and the second header sequence have the same data length.

According to a second aspect of the present disclosure, a wireless communication device is provided. The device includes at least one processor, and a storage device storing at least one program thereon, which when executed by the processor, causes the processor to carry out the method as described above.

According to a third aspect of the present disclosure, a computer-readable storage medium is provided. The computer-readable storage medium stores thereon a computer-executable instruction which, when executed by a processor, causes the processor to carry out the method as described above.

According to an embodiment of the present disclosure, a computer program product is provided. The product includes a computer program or a computer instruction stored in a computer-readable storage medium which, when executed by a processor of a computer device, causes the computer device to carry out the method as described above.

### BRIEF DESCRIPTION OF DRAWINGS

FIG. 1a depicts a schematic diagram showing the interactions in an application scenario of a method for data transmission according to an embodiment of the present disclosure;
FIG. 1b depicts a schematic diagram showing the interactions in another application scenario of a method for data transmission according to an embodiment of the present disclosure;
FIG. 2 depicts a flowchart showing a method for data transmission according to an embodiment of the present disclosure;
FIG. 3 depicts a schematic diagram showing a target data sequence employed in the method for data transmission according to an embodiment of the present disclosure;
FIG. 4 depicts a schematic diagram illustrating the durations of two target data sequences of the method for data transmission according to an embodiment of the present disclosure;
FIG. 5 depicts a schematic diagram illustrating the durations of two target data sequences of the method for data transmission according to another embodiment of the present disclosure;
FIG. 6 depicts a schematic diagram illustrating a first embodiment of two target data sequences transmitted under different frequency domain bandwidths in the method for data transmission according to an embodiment of the present disclosure;
FIG. 7 depicts a schematic diagram illustrating a second embodiment of two target data sequences transmitted under different frequency domain bandwidths in the method for data transmission according to an embodiment of the present disclosure;
FIG. 8 depicts a schematic diagram illustrating a third embodiment of two target data sequences transmitted under different frequency domain bandwidths in the method for data transmission according to an embodiment of the present disclosure;
FIG. 9 depicts a schematic diagram illustrating a fourth embodiment of two target data sequences transmitted under different frequency domain bandwidths in the method for data transmission according to an embodiment of the present disclosure;
FIG. 10 depicts a schematic diagram illustrating a fifth embodiment of two target data sequences transmitted under different frequency domain bandwidths in the method for data transmission according to an embodiment of the present disclosure;
FIG. 11 depicts a schematic diagram illustrating a sixth embodiment of two target data sequences transmitted under different frequency domain bandwidths in the method for data transmission according to an embodiment of the present disclosure;
FIG. 12 depicts a flowchart showing generating and transmitting a first data sequence in the method for data transmission according to an embodiment of the present disclosure;
FIG. 13 depicts a flowchart showing a time-domain data sequence in the method for data transmission according to an embodiment of the present disclosure;
FIG. 14 depicts a schematic diagram showing a time window/duration for performing a Discrete Fourier Transform (DFT) on a time-domain data sequence in the method for data transmission according to an embodiment of the present disclosure;
FIG. 15 depicts a flowchart showing generating and transmitting a second data sequence in the method for data transmission according to an embodiment of the present disclosure; and
FIG. 16 depicts a schematic diagram showing a device for data transmission according to an embodiment of the present disclosure.

### DETAILED DESCRIPTION

The purpose, technical scheme and advantages of the present disclosure will become apparent through the following description for various embodiments in conjunction with the drawings. It should be understood that the embodiments described here are intended for illustration but not limitation of the present disclosure.

It should be noted that although the devices are shown with individual functional modules in the schematic diagram and the logical sequences are shown in the flow chart, in some cases, the devices can have different modules than those shown and the operations can be executed in a different order than those shown. It should be noted that the terms "first" and "second", if used in the description, the claims and the drawings are intended to distinguish similar objects, and do not necessarily imply any specific order or sequence.

The flowcharts as shown in the drawings are illustrative merely, and it is not necessary to include all the contents and operations/steps. And the operations/steps are not necessarily executed in the described order. For example, certain operations or steps may be subdivided, while others may be combined or partially combined. Accordingly, the actual execution order may vary depending on implementation circumstances.

Fifth-generation wireless systems (5G) New Radio (NR) support data transmission using two technologies: Cyclic Prefix Orthogonal Frequency Division Multiplexing (CP-OFDM) and Discrete Fourier Transform-spread Orthogonal Frequency Division Multiplexing (DFT-s-OFDM). During data transmission, the same Cyclic Prefix (CP) is often employed for users associated with the same cell to eliminate intersymbol interference. However, the CP takes up some time-frequency resources, which reduces spectral efficiency. Hence, it is important to design a scheme for data transmission with reduced CP overhead to improve spectral efficiency. In order to improve spectral efficiency with reduced CP overhead, a method for data transmission, a wireless communication device, a storage medium, and a computer program product are provided in various embodiments of the present disclosure.

It should be noted that the method for data transmission as set forth in the embodiments of the present disclosure can be applied to communication between at least two communication devices located in a communication network topology. The sender communication device is configured to acquire a first data sequence and a second data sequence, where the first data sequence and the second data sequence are allocated with different frequency domain bandwidths; to add a first header sequence to the leading end of the first data sequence, and add a first trailer sequence to the tailing end of the first data sequence to form a first target data sequence; to add a second header sequence to the leading end of the second data sequence, and add a second trailer sequence to the trailing end of the second data sequence to form a second target data sequence; and to transmit the first target data sequence and the second target data sequence, where the first trailer sequence and the second trailer sequence have different data lengths, and the first header sequence and the second header sequence have the same data length.

In an implementation, the first data sequence and the second data sequence may be data belonging to the same user, or may be data belonging to different users.

It should be noted that in the communication network topology, the sender communication device serving may be a user equipment, or may be a network device such as a base station that employs a Cyclic Prefix (CP) to encapsulate raw data, and the present disclosure is not limited thereto. The communication network topology can also be selectively set according to practical requirements.

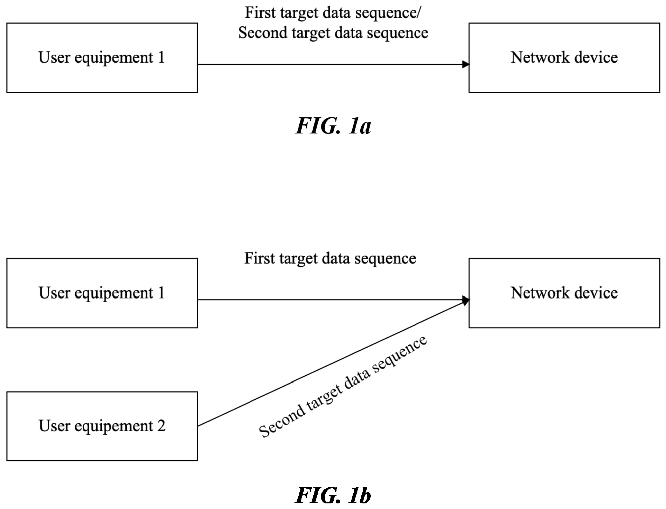

In an embodiment, referring to FIG. 1a, a user terminal 1 and a network device are in communicative connection with each other in a communication network topology. As the sender, user terminal 1 once obtaining the first data sequence and the second data sequence to be transmitted, user terminal 1 obtains the first target data sequence corresponding to the first data sequence and the second target data sequence corresponding to the second data sequence according to the method as discussed above, and transmits both the first target data sequence and the second target data sequence to the network device. Referring to FIG. 1b, user terminal 1, user terminal 2, and a network device are in communicative connection with each other in a communication network topology. With user terminal 1 and user terminal 2 both serving as senders, user terminal 1 obtains a first data sequence to be transmitted and obtains a first target data sequence according to the method discussed above, and user terminal 2 obtains a second data sequence to be transmitted and obtains a second target data sequence according to the method discussed above. In this case, the network device receives the first target data sequence from user terminal 1 and the second target data sequence from user terminal 2. It should be understood that both the first data sequence and the second data sequence are raw data generated by the respective communication device and intended to be transmitted to the other communication device in communicative connection therewith.

It should be noted that in some other embodiments, referring to the network topology of FIG. 1a and FIG. 1b, the sender may be a network device and the receiver may be a terminal device.

A network device is a device that provides random access for a terminal device or a chip that can be configured in such a device, such as, an evolved Node B (eNB), a Radio Network Controller (RNC), a Node B (NB), a Base Station Controller (BSC), a Base Transceiver Station (BTS), a home base station (e.g., home evolved NodeB, or home Node B, HNB), a Baseband Unit (BBU), an Access Point (AP) in a Wireless Fidelity (Wi-Fi) system, a wireless relay node, a wireless backhaul node, a Transmission and Reception Point (TRP or TP), etc, or may also be a gNB in a 5G system (e.g., New Radio), or a Transmission Point (TRP or TP), one or a group of antenna panels (including multiple antenna panels) of a base station in a 5G system, or a network node constituting a gNB or a transmission point, such as a Baseband Unit (BBU), or a Distributed Unit (DU), etc.

A terminal device, also referred to as a User Equipment (UE), a Mobile Station (MS), a Mobile Terminal (MT), a terminal, etc., is a device that provides voice and/or data connectivity to a user. For example, terminal devices include handheld devices with wireless connection functions, vehicle-mounted devices, etc. Currently, terminal devices may be: a mobile phone, a tablet computer, a laptop computer, a personal digital assistant (PDA), a Mobile Internet Device (MID), a wearable device, a Virtual Reality (VR) device, an Augmented Reality (AR) device, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, or a wireless terminal capable of Vehicle-to-Vehicle (V2V) communication, etc.

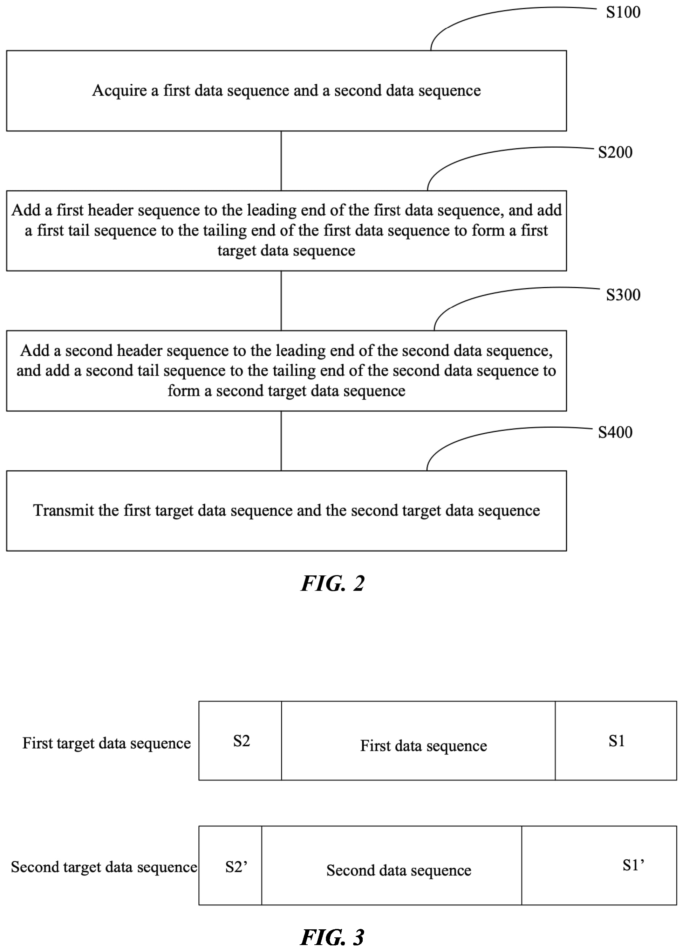

Referring to FIG. 2, which depicts a method for data transmission according to an embodiment of the present disclosure. The method includes the following operations.

At operation S100, a first data sequence and a second data sequence are acquired, where the first data sequence and the second data sequence are allocated with different frequency domain bandwidths.

At operation S200, a first header sequence is added to the leading end of the first data sequence and a first trailer sequence is added to the trailing end of the first data sequence to form a first target data sequence.

At operation S300, a second header sequence is added to the leading end of the second data sequence and a second trailer sequence is added to the trailing end of the second data sequence to form a second target data sequence.

At operation S400, the first target data sequence and the second target data sequence are transmitted.

In an implementation, the first trailer sequence and the second trailer sequence have different data lengths, and the first header sequence and the second header sequence have the same data length.

Accordingly, by inserting the first header sequence and the second header sequence of the same length to the leading end of the first data sequence and the second data sequence to be transmitted, respectively, interference with the first trailer sequence and the second trailer sequence after oversampling can be reduced. In this case, the first trailer sequence and the second trailer sequence can be configured with a required length according to the influence of multipath delay. For example, when the multipath delay decreases, a shorter first trailer sequence and second trailer sequence can be configured, thereby increasing the amount of valid data of the first data sequence and second data sequence. Therefore, compared with the related art, embodiments of the present disclosure can reduce CP overhead and improve spectral efficiency.

It should be noted that although the first data sequence and the second data sequence are allocated with different frequency domain bandwidths, the first target data sequence and the second target data sequence can be transmitted on the same or different time-frequency resources, respectively. That is, the first target data sequence and the second target data sequence can be transmitted at different times in different frequency domains, or at the same time in different frequency domains. The first data sequence and the second data sequence may be data transmitted by the same user at different times with the same frequency domain bandwidth, or may be data transmitted by two different users at the same time with different frequency domain bandwidths.

In an embodiment, referring to FIG. 3, a first header sequence S2 and a first trailer sequence S1 are inserted to the leading end and the trailing end of the first data sequence, respectively, to form a first target data sequence. A second header sequence S2' and a second trailer sequence S1' are inserted to the leading end and to the trailing end of the second data sequence, respectively, to form a second target data sequence. The first target data sequence and the second target data sequence have the same duration, while the lengths of S1 and S1' are different, and the durations of S2 and S2' are different.

It should be understood that at step S400, transmitting the first target data sequence and the second target data sequence, includes:
transmitting the first target data sequence via a first frequency domain resource; and transmitting the second target data sequence via a second frequency domain resource; where the frequency domain bandwidths corresponding to the first frequency domain resource and the second frequency domain resource are different.

It should be noted that the frequency domain bandwidth corresponding to the first frequency domain resource is the same as the frequency domain bandwidth allocated to the first data sequence. The frequency domain bandwidth corresponding to the second frequency domain resource is the same as the frequency domain bandwidth allocated to the second data sequence. The durations corresponding to the first frequency domain resource and the second frequency domain resource may be the same or different.

It should be noted that in some embodiments, the different frequency domain bandwidths corresponding to the first frequency domain resource and the second frequency domain resource indicate that the frequency domain bandwidths allocated to two different users are different. In some embodiments, the different frequency domain bandwidths corresponding to the first frequency domain resource and the second frequency domain resource indicate that the bandwidths of different sub-bands of the same user are different. In some embodiments, the different frequency domain bandwidths corresponding to the first frequency domain resource and the second frequency domain resource indicate that frequency domain bandwidths allocated to different OFDM symbols of the same user are different.

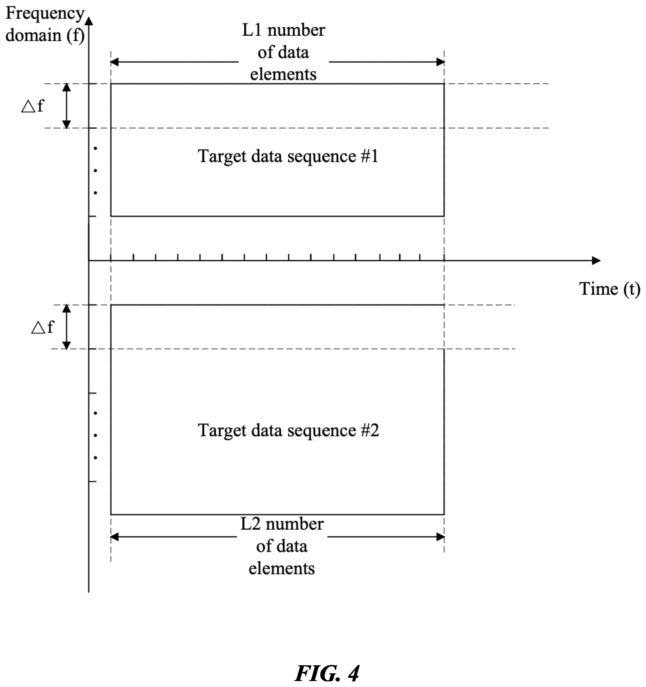

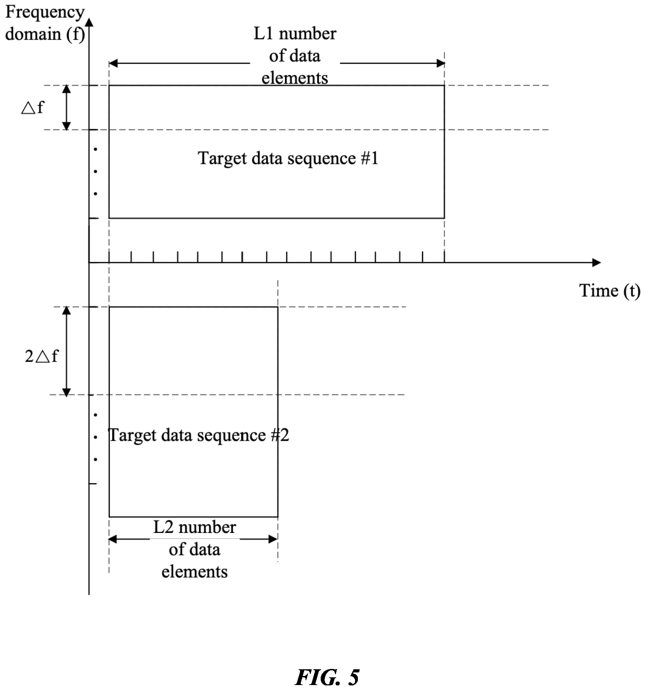

In an exemplary embodiment, let the first target data sequence corresponding to the first data sequence be target data sequence #1, and the second target data sequence corresponding to the second data sequence be target data sequence #2. Since the first data sequence and the second data sequence are allocated with different frequency domain bandwidths, target data sequence #1 and target data sequence #2 are allocated different frequency domain bandwidths. In particular, when the subcarrier spacings of the two target data sequences are the same, as shown in FIG. 4, the subcarrier spacings are both △f. Thus, the numbers of subcarriers allocated to target data sequence #1 and target data sequence #2 are different, satisfying L1 ≠ L2, where L1 is the number of data elements included in target data sequence #1, and L2 is the number of data elements included in target data sequence #2. The durations of the first target data sequence and the second target data sequence are both equal to the reciprocal of the subcarrier spacing, i.e., 1/△f. In this case, the first target data sequence and the second target data sequence have the same duration. In contrast, when the subcarrier spacings are different, referring to FIG. 5, the subcarrier spacing of target data sequence #1 is △f, and the subcarrier spacing of target data sequence #2 is 2△f. As a result, the subcarrier spacing of target data sequence #1 is half of the subcarrier spacing of target data sequence #2. The numbers of subcarriers of target data sequence #1 and target data sequence #2 may be the same or different, satisfying L1 ≠ 2×L2. The duration of target data sequence #1 is equal to the reciprocal of the subcarrier spacing, i.e., 1/△f. The duration of target data sequence #2 is equal to the reciprocal of the corresponding subcarrier spacing, i.e., 1/(2*△f*). In this case, the first target data sequence and the second target data sequence have different durations. As shown in FIG. 5, the duration of target data sequence #2 is half the time duration of target data sequence #1.

It should be understood that the first header sequence and the second header sequence contain the same number of data elements, and the first trailer sequence and the second trailer sequence contain a different number of data elements.

It should be understood that the first header sequence and the second header sequence are identical sequences, and the first trailer sequence and the second trailer sequence are different sequences.

It should be understood that the durations of the first header sequence and the second header sequence are different, and the durations of the first trailer sequence and the second trailer sequence are the same or different.

It should be understood that when the frequency domain bandwidth allocated to a user is larger, the duration in the time domain of the header sequence inserted before the data sequence can be shortened, thereby expanding the duration of the data sequence, which can further improve spectral efficiency. For example, if more frequency domain bandwidth is allocated to the first data sequence, the duration of the first header sequence is shorter. In this case, the first data sequence carried by the first target data carries is longer, such that, more data is carried, thereby improving spectral efficiency. As a result, the durations of the first header sequence and the second header sequence are different, and the durations of the first trailer sequence and the second trailer sequence are the same or different.

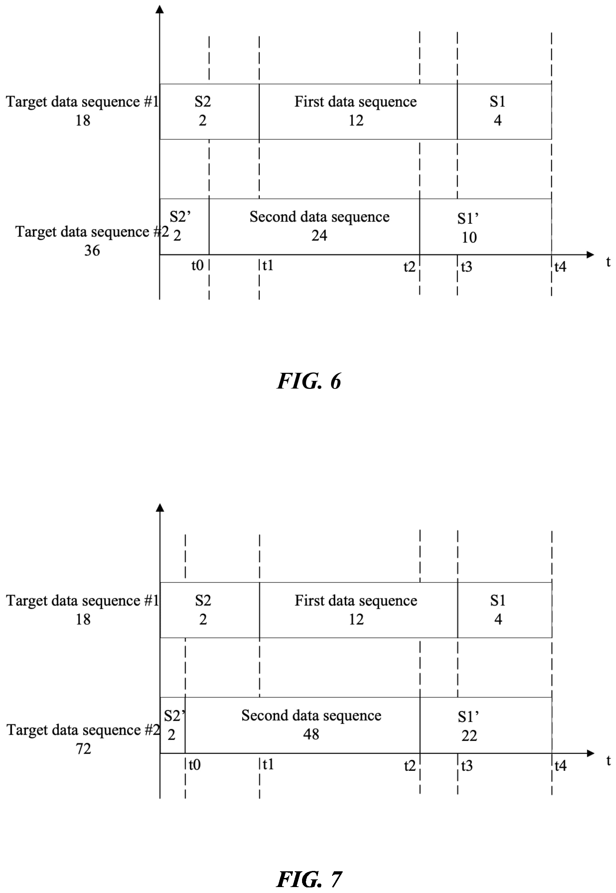

As shown in FIG. 6, in an embodiment, the subcarrier spacings are the same. As shown in FIG. 6, the first target data sequence corresponding to the first data sequence is target data sequence #1, and the second target data sequence corresponding to the second data sequence is target data sequence #2. The frequency domain bandwidth allocated to the first data sequence is less than the frequency domain bandwidth allocated to the second data sequence. The first data sequence contains 12 data elements, and the second data sequence contains 24 data elements. A first header sequence S2 containing 2 data elements can be inserted to the leading end of the first data sequence, and a second header sequence S2' containing 2 data elements can be inserted to the leading end of the second data sequence. In this case, the header sequences inserted to the leading end of the first data sequence and the second data sequence contain the same number of data elements. As shown in FIG. 6, a first trailer sequence S1 containing 4 data elements is inserted to the trailing end of the first data sequence, and a second trailer sequence S1' containing 10 data elements is inserted to the trailing end of the second data sequence. In this case, S1 and S1' contain different numbers of data elements. Therefore, target data sequence #1 contains 18 data elements (i.e., 2+12+4), and target data sequence #2 contains 36 data elements (i.e., 2+24+10). In this case, target data sequence #1 and target data sequence 2 contain different numbers of data elements. Correspondingly, the first header sequence S2 has a duration of t1, and the second header sequence S2' has a duration of t0. That is, the duration of the first header sequence S2 is different from the duration of the second header sequence S2'. The duration of the first header sequence S2 is greater than the duration of the first header sequence S2'. The first trailer sequence S1 has a duration of (t4-t3), and the second trailer sequence S1' has a duration of (t4-t2). That is, the duration of the first trailer sequence S1 is different from the duration of the second trailer sequence S1'. In this case, target data sequence #1 has a duration of t4, and target data sequence #2 has a duration of t4. The durations of the two target data sequences are the same.

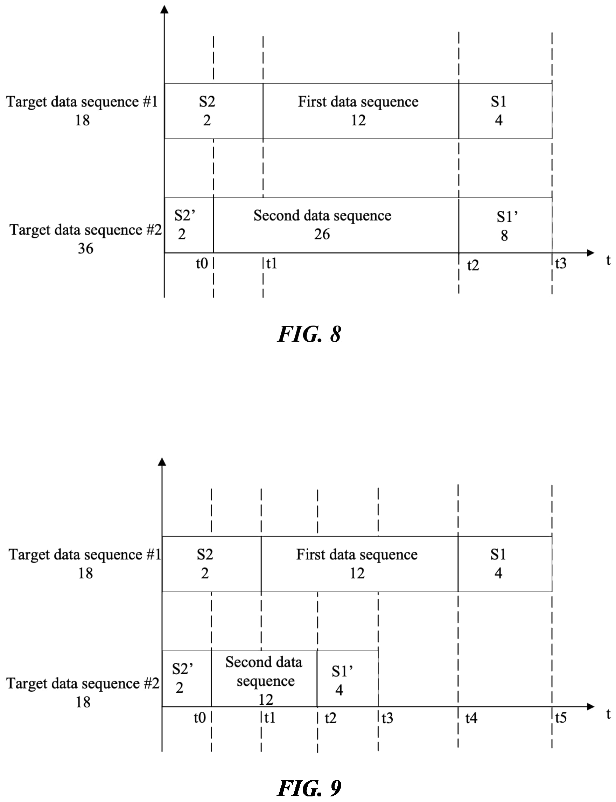

In an embodiment, as shown in FIG. 8, the first target data sequence corresponding to the first data sequence is target data sequence #1, and the second target data sequence corresponding to the second data sequence is target data sequence #2. The frequency domain bandwidth allocated to the first data sequence is less than the frequency domain bandwidth allocated to the second data sequence. The first data sequence contains 12 data elements. A first header sequence S2 is inserted to the leading end of the first data sequence, and the first header sequence S2 contains 2 data elements. A first trailer sequence S1 is inserted to the trailing end of the first data sequence, and the first trailer sequence S1 contains 4 data elements, to form target data sequence #1. As a result, target data sequence #1 contains 18 data elements. The second data sequence contains 26 data elements. A second header sequence S2' is inserted to the leading end of the second data sequence, and the second header sequence S2' contains 2 data elements. A second trailer sequence S1 is inserted to the trailing end of the second data sequence, and the second trailer sequence S1' contains 8 data elements, to form target data sequence #2. As a result, target data sequence #2 contains 36 data elements. In this case, the first data sequence and the second data sequence contain a different number of data elements. The first header sequence S2 and the second header sequence S2' contain the same number of data elements. The first trailer sequence S1 and the second trailer sequence S1' contain a different number of data elements. Therefore, the two target data sequences contain a different number of data elements. Accordingly, as shown in FIG. 8, the duration of the first data sequence is (t2-t1), the duration of the first header sequence S2 is t1, and the duration of the first trailer sequence S1 is (t3-t2). Therefore, the duration of target data sequence #1 is t3. Accordingly, the duration of the first data sequence is (t2-t0), the duration of the second header sequence S2' is t0, and the duration of the second trailer sequence S1' is (t3-t2). Therefore, the duration of target data sequence #2 is t3. That is, the durations of the first data sequence and the second data sequence are different. The durations of the first header sequence S2 and the second header sequence S2' are different. The durations of the first trailer sequence S1 and the second trailer sequence S1' are the same. The two target data sequences have the same duration.

It can be seen from the embodiments with respect to FIG. 6 and FIG. 8 above that the durations of the first header sequence and the second header sequence are different. The durations of the first trailer sequence and the second trailer sequence are the same or different.

It should be understood that the ratio of the duration of the first header sequence to duration of the second header sequence is equal to the reciprocal of the ratio of the frequency domain bandwidth allocated to the first data sequence to the ratio of the frequency domain bandwidth allocated to the second data sequence.

In an example, the frequency domain bandwidth of the first data sequence is denoted as B1 and the frequency domain bandwidth of the second data sequence is denoted as B2, then △t1/△t2 = B2/B1, where △t1 is the duration of the first header sequence, and △t2 is the duration of the second header sequence. The frequency domain bandwidths B1 and B2 can both be determined according to the number of subcarriers and the subcarrier spacing. For example, if the first data sequence and the second data sequence include K1 and K2 subcarriers respectively, the subcarrier spacing of the first data sequence is △f1, and the subcarrier spacing of the second data sequence is △f2, then the frequency domain bandwidths allocated to the first data sequence and the second data sequence are B1 = K1 × △f1 and B2 = K2 × △f2, respectively. As shown in FIG. 7, the number of data elements of each of the first data sequence and the second data sequence are proportional to the respective duration, and the number of data elements is proportional to the frequency domain bandwidth. In FIG. 7, the duration of S2' in target data sequence 2 is 1/4 of the duration of S2 in target data sequence 1.

It should be understood that the first data sequence and the second data sequence may have the same or different durations.

In an embodiment, referring to FIG. 6 to FIG. 11, the first data sequence and the second data sequence may have the same or different durations.

It should be understood that the frequency domain bandwidth allocated to the first data sequence is greater than the frequency domain bandwidth allocated to the second data sequence, and the duration of the first header sequence is less than the duration of the second header sequence.

In an embodiment, as shown in FIG. 7, the first target data sequence corresponding to the first data sequence is target data sequence #1, and the second target data sequence corresponding to the second data sequence is target data sequence #2. The frequency domain bandwidth allocated to the first data sequence is less than the frequency domain bandwidth allocated to the second data sequence. The first data sequence contains 12 data elements. A first header sequence S2 containing 2 data elements is inserted to the leading end of the first data sequence, and a first trailer sequence S1 containing 4 data elements is inserted to the trailing end of the first data sequence, thus target data sequence 1 contains 18 data elements; the second data sequence contains 48 data elements. A second header sequence S2' containing 2 data elements is inserted to the leading end of the second data sequence, then a first trailer sequence S1' containing 22 data elements is inserted to the trailing end of the second data sequence, thus target data sequence 2 contains 72 data elements. In this case, the first data sequence and the second data sequence contain different numbers of data elements. The first header sequence S2 and the first header sequence S2' contain the same number of data elements. The first trailer sequence S1 and the second trailer sequence S1' contain a different numbers of data elements. The target data sequence #1 and the target data sequence #2 contain different numbers of data elements. Accordingly, the duration of the first data sequence is (t3-tl), the duration of the first header sequence S2 inserted to the leading end of the first data sequence is t1, the duration of the first trailer sequence S1 inserted to the trailing end of the first data sequence is (t4-t3), and the duration of the target data sequence #1 is t4. The duration of the second data sequence is (t2-t0), the duration of the sequence S2' inserted to the leading end of the second data sequence is t0, the duration of the sequence S1' inserted to the trailing end of the second data sequence is (t4-t2), and the duration of the target data sequence #2 is t4. That is, the durations of the two target data sequences are the same; the durations of the header sequences inserted to the leading end of the first data sequence and the second data sequence are different; the durations of the trailer sequences inserted to the trailing end of the first data sequence and the second data sequence are different; and the first data sequence and the second data sequence have the same duration.

It can be seen from the embodiments with respect to FIG. 6 and FIG. 7 discussed above that the larger the frequency domain bandwidth allocated to the first data sequence, the shorter the duration of the first header sequence is. The larger the frequency domain bandwidth allocated to the second data sequence, the shorter the duration of the second header sequence is.

It should be understood that the durations of the first target data sequence and the second target data sequence are the same, and the numbers of data elements contained in the first target data sequence and the second target data sequence are different.

It should be understood that the durations of the first target data sequence and the second target data sequence are different, and the numbers of data elements contained in the first target data sequence and the second target data sequence are the same or different.

It should be understood that the shorter the duration of the first header sequence, the more data elements the first target data sequence contains.

Likewise, the shorter the duration of the second header sequence, the more data elements the second target data sequence contains.

It should be understood that, the ratio of the duration of the first target data sequence to duration of the second target data sequence is equal to a reciprocal of a ratio of a subcarrier spacing of frequency domain bandwidth allocated to the first data sequence to a subcarrier spacing of frequency domain bandwidth allocated to the second data sequence.

In an example, the duration of the first target data sequence is denoted as △t3 and the duration of the second target data sequence is denoted as △t4, then △t3/△t4 = △f2/△f1. △f1 denotes the subcarrier spacing of the frequency domain bandwidth allocated to the first data sequence, and △f2 denotes the subcarrier spacing of the frequency domain bandwidth allocated to the second data sequence.

It should be understood that when the subcarrier spacings of the frequency domain bandwidths allocated to the first data sequence and the second data sequence are the same, the durations of the first target data sequence and the second target data sequence are the same.

Alternatively, when the subcarrier spacings of the frequency domain bandwidths allocated to the first data sequence and the second data sequence are different, the durations of the first target data sequence and the second target data sequence are different.

In an embodiment, when the subcarrier spacings of the frequency domain bandwidths allocated to the currently allocated first data sequence and second data sequence are the same, the durations of the first target data sequence and the second target data sequence are the same. Alternatively, when the subcarrier spacings of the frequency domain bandwidths allocated to the currently allocated first data sequence and second data sequence are different, the durations of the first target data sequence and the second target data sequence are different.

In an embodiment, as shown in FIG. 9, the subcarrier spacings of the allocated frequency domain bandwidths are different. In particular, as shown in FIG. 9, the first target data sequence corresponding to the first data sequence is target data sequence #1, and the second target data sequence corresponding to the second data sequence is target data sequence #2. The frequency domain bandwidth allocated to the first data sequence is less than the frequency domain bandwidth allocated to the second data sequence. The first data sequence contains 12 data elements. A first header sequence S2 is inserted to the leading end of the first data sequence, and the first header sequence S2 contains 2 data elements. A first trailer sequence S1 is inserted to the trailing end of the first data sequence, and the first trailer sequence S1 contains 4 data elements, to form target data sequence #1. As a result, target data sequence #1 contains 18 data elements. The second data sequence contains 12 data elements. A second header sequence S2' containing 2 data elements is inserted to the leading end of the second data sequence; and a second trailer sequence S1' containing 4 data elements is inserted to the trailing end of the second data sequence. In this case, target data sequence #2 is formed, which contains 18 data elements. That is, the first data sequence and the second data sequence contain the same number of data elements; the first header sequence S2 and the second header sequence S2' contain the same number of data elements; and the first trailer sequence S1 and the second trailer sequence S1' contain the same number of data elements. In this case, the two target data sequences contain the same number of data elements. Accordingly, as shown in FIG. 8, the duration of the first data sequence is (t4-tl), the duration of the first header sequence S2 is t1, and the duration of the first trailer sequence S1 is (t5-t4). Therefore, the duration of target data sequence #1 is t5. Likewise, the duration of the second data sequence is (t2-t0), the duration of the second sequence S2' is t0, and the duration of the second trailer sequence S1' is (t3-t2). Therefore, the duration of target data sequence #2 is t3. That is, the durations of the first data sequence and the second data sequence are different. The durations of the first header sequence S2 and the second header sequence S2' are different. The durations of the first trailer sequence S1 and the second trailer sequence S1' are different. The two target data sequences have the different durations. In particular, the duration of target data sequence #2 is half the duration of target data sequence #1; the duration of S2' of target data sequence #2 is half the duration of S2 corresponding to target data sequence #1, the duration of the second data sequence is half the duration of the first data sequence; the duration of the second trailer sequence S1' is half the duration of the first trailer sequence S1.

It can be seen from the embodiments with respect to FIG. 6 and FIG. 9 that the subcarrier spacings of the first data sequence and the second data sequence can be the same or different. In the embodiment with respect to FIG. 6, the subcarrier spacings are the same, and the durations are the same. In the embodiment with respect to FIG. 9, the subcarrier spacings are different, and the durations are different.

It should be understood that the durations of the first target data sequence and the second target data sequence are the same, and the numbers of data elements contained in the first target data sequence and the second target data sequence are different. Alternatively, the durations of the first target data sequence and the second target data sequence are different, and the numbers of data elements contained in the first target data sequence and the second target data sequence are the same or different.

It should be understood that the durations of the first target data sequence and the second target data sequence are the same. In some embodiments, the numbers of data elements contained in the first target data sequence and the second target data sequence are different.

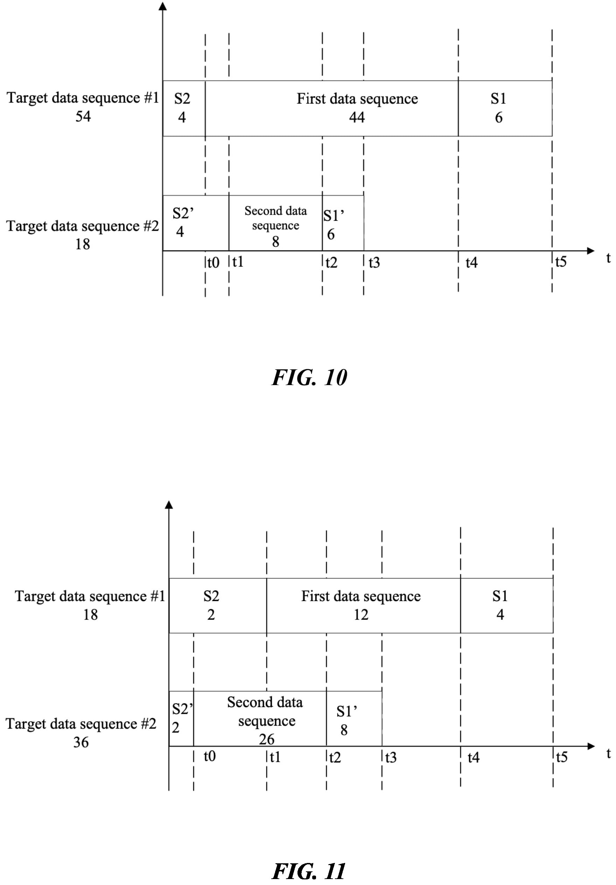

In an embodiment, as shown in FIG. 10, the two first data sequences are a first data sequence and a second data sequence, respectively. The frequency domain bandwidth allocated to the first data sequence is greater than the frequency domain bandwidth allocated to the second data sequence. The first data sequence contains 44 data elements. A sequence S2 containing 4 data elements is inserted to the leading end of the first data sequence, and a sequence S1 containing 6 data elements is inserted to the trailing end of the first data sequence, to form target data sequence #1. Target data sequence #1 contains 54 data elements. The second data sequence contains 8 data elements. A sequence S2' containing 4 data elements is inserted to the leading end of the second data sequence, and a sequence S1' containing 6 data elements is inserted to the trailing end of the second data sequence, to form target data sequence #2. Target data sequence #2 contains 18 data elements. The two first data sequences contain a different number of data elements. The sequences S2 inserted to the leading end of the two first data sequences contain the same number of data elements. The sequences S1 inserted to the trailing end of the first data sequence and the second data sequence contain the same number of data elements. Target data sequence #1 and target data sequence #2 contain a different number of data elements. The duration of the first data sequence is (t4-t0), the duration of the sequence S2' inserted to the leading end of the first data sequence is t0, the duration of the sequence S1' inserted to the trailing end of the first data sequence is (t5-t4), and the duration of the target data sequence #1 is t5. The duration of the second data sequence is (t2-t1), the duration of the second header sequence S2' inserted to the leading end of the second data sequence is t1, and the duration of the second trailer sequence S1' inserted to the trailing end of the second data sequence is (t3-t2). In this case, the duration of target data sequence #2 is t3. That is, the durations of the first data sequence and the second data sequence are different. The durations of the header sequences inserted to the first data sequence and the second data sequence are different. The durations of the trailer sequences inserted to the trailing end of the first data sequence and the second data sequence are different. The two target data sequences have different durations. In particular, the duration of target data sequence #2 is half the duration of target data sequence #1. The duration of S2 in target data sequence #1 is 2/3 of the duration of S2 in target data sequence #2.

It should be understood that, with respect to the embodiment shown in FIG. 10, the duration can be calculated as illustrated below by way of example.
(1) The durations of the two target data sequences are related to the subcarrier spacing. In a case where the subcarrier spacings are both 15 kHz, the durations of the two target data sequences are the same. In a case where one subcarrier spacing is 15 kHz and the other subcarrier spacing is 30 kHz, then the duration of the sequence with 30 kHz subcarrier spacing is shorter, which is half the duration of the sequence with 15 kHz subcarrier spacing.
(2) The duration of S2 in target data sequence #1 equals to 4/(15 kHz * 54), where '4' is the number of data elements contained in S2, and '54' is the number of data elements contained in target data sequence #1.
(3) The duration of S2' in target data sequence #2 equals to 4/(30 kHz * 18), where '4' is the number of data elements contained in S2', and '18' is the number of data elements contained in target data sequence #1.

According to an embodiment, as shown in FIG. **11****,** the frequency domain bandwidth allocated to the first data sequence is less than the frequency domain bandwidth allocated to the second data sequence. The first data sequence contains 12 data elements. A first header sequence S2 is inserted to the leading end of the first data sequence, and the first header sequence S2 contains 2 data elements. A first trailer sequence S1 is inserted to the trailing end of the first data sequence, and the first trailer sequence S1 contains 4 data elements, to form target data sequence #1. As a result, target data sequence #1 contains 18 data elements. The second data sequence contains 26 data elements. A second header sequence S2' is inserted to the leading end of the second data sequence, and the second header sequence S2' contains 2 data elements. A second trailer sequence S1 is inserted to the trailing end of the second data sequence, and the second trailer sequence S1' contains 8 data elements, to form target data sequence #2. As a result, target data sequence #2 contains 36 data elements. In this case, the first data sequence and the second data sequence contain a different number of data elements. The first header sequence S2 and the second header sequence S2' contain the same number of data elements. The first trailer sequence S1 and the second trailer sequence S1' contain a different number of data elements. The target data sequence #1 and the target data sequence #2 contain a different number of data elements. Accordingly, the duration of the first data sequence is (t4-t1), the duration of the first header sequence S2 inserted to the leading end of the first data sequence is t1, the duration of the first trailer sequence S1 inserted to the trailing end of the first data sequence is (t5-t4), and the duration of the target data sequence #1 is t5. The duration of the second data sequence is (t2-t0), the duration of the second header sequence S2' inserted to the leading end of the second data sequence is t0, and the duration of the second trailer sequence S1' inserted to the trailing end of the second data sequence is (t3-t2). In this case, the duration of target data sequence #2 is t3. That is, the durations of the first data sequence and the second data sequence are different. The durations of the first header sequence S2 and the second header sequence S2' are different. The durations of the first trailer sequence S1 and the second trailer sequence S1' are different. The two second data sequences have different durations. In particular, the duration of target data sequence #2 is half the duration of target data sequence #1. The duration of S2 in target data sequence #1 is 4 times the duration of S2 in target data sequence #2.

Accordingly, comparing FIG. 8 and FIG. 11, the difference lies in that the durations of the two target data sequences are different. Comparing FIG. 9 and FIG. 11, the larger the frequency domain bandwidth, the shorter the domain of the header sequence.

It should be understood that the duration of the first trailer sequence is determined according to the terminal device delay requirement corresponding to the first data sequence, and the duration of the second trailer sequence is determined according to the terminal device delay requirement corresponding to the second data sequence.

It should be understood that the first and second header sequences, and the first and second trailer sequences are reference signal sequences, or sequences known to a network device.

It should be understood that transmitting the first target data sequence includes: successively performing a first Discrete Fourier Transform (DFT) and a first Inverse Fast Fourier Transform (IFFT) on the first target data sequence to obtain a transformed first target data sequence, and transmitting the transformed first target data sequence. The time window of the first DFT is equal to the duration of the first target data sequence, and a start point and an end point of the time window of the first DFT correspond to a temporal start point and an end point of the first target data sequence. The number of points of the first IFFT is greater than the number of points of the first DFT. The number of data elements of the transformed first target data sequence is greater than the number of data elements of the first target data sequence. The duration of the first target data sequence is equal to the Orthogonal Frequency Division Multiplexing (OFDM) symbol length of the first target data sequence. The duration of the transformed first target data sequence is equal to the OFDM symbol length of the transformed first target data sequence.

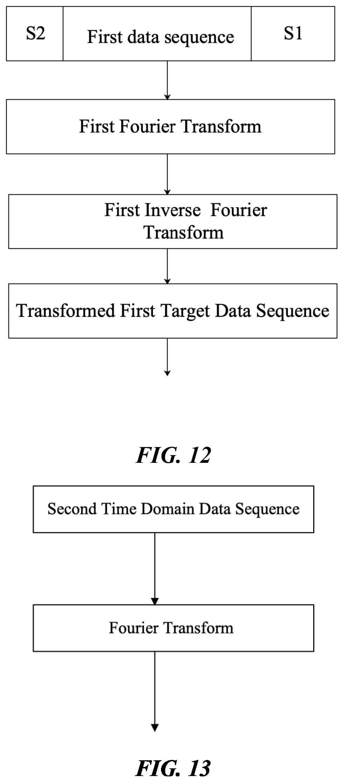

According to an embodiment, FIG. 12 illustrates by way of example, the relationship between waveform modulation performed on the first data sequence, and the frequency domain bandwidths allocated to the first data sequence, the first target data sequence, the first header sequence, and the first trailer sequence. First, the first header sequence S2 is inserted to the leading end of the first data sequence, and the first trailer sequence S1 is inserted to the trailing end of the first data sequence to form the first target data sequence. In this case, the time domain length of the first target data sequence is equal to the OFDM symbol length. The number of points of the first Discrete Fourier Transform (DFT) is set to the number of data elements in the first target data sequence before performing the DFT. The number of points of the first Inverse Fast Fourier Transform (IFFT) is set to be greater than the number of points of the first DFT. That is, zero subcarriers are added to the frequency domain data after performing the first DFT on the first target data sequence, and then an oversampling IFFT is performed. Thus, the number of data elements of the transformed first target data sequence with the first IFFT is greater than the length of the first target data sequence before the first DFT processing. In this case, the time domain length of the transformed first target data sequence is also equal to the OFDM symbol length. The frequency domain bandwidth allocated to the transformed first target data sequence is equal to the frequency domain bandwidth allocated to the first data sequence.

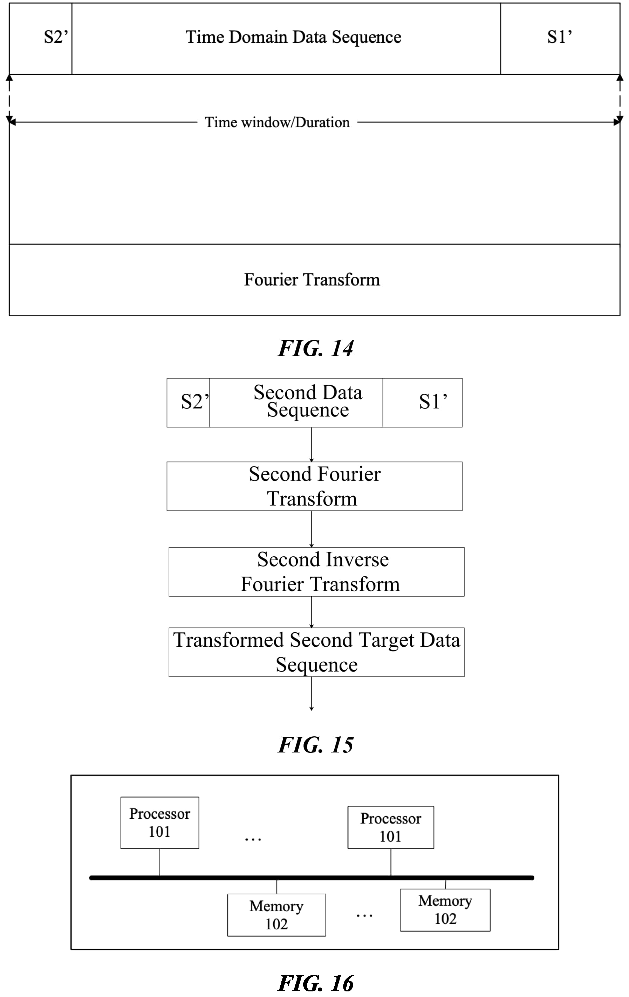

According to an embodiment, referring to FIG. 13, the first data sequence is data transmitted in the time domain, which means the second target data sequence is a time-domain data sequence. In this case, the time window/ duration for the DFT performed on the time-domain data sequence is as shown in FIG. 14. In FIG. 13 and FIG. 14, the DFT is performed on the time-domain data sequence. The time window of the DFT is the time window of the time-domain data sequence. Taking the time-domain data as the first target data sequence as an example, the duration of the DFT is the duration of the first target data sequence. The start point and the end point of the time window of the DFT are the start point and the end point of the time-domain data sequence, respectively.

It should be understood that transmitting the second target data sequence includes: successively performing a second Discrete Fourier Transform (DFT) and a second Inverse Fast Fourier Transform (IFFT) on the second target data sequence to obtain a transformed second target data sequence, and transmitting the transformed second target data sequence. The time window of the second DFT is equal to the duration of the second target data sequence, and a start point and an end point of the time window of the second DFT correspond to a temporal start point and an end point of the second target data sequence. The number of points of the first IFFT is greater than the number of points of the second DFT. The number of data elements of the transformed second target data sequence is greater than the number of data elements of the second target data sequence. The duration of the second target data sequence is equal to the OFDM symbol length of the second target data sequence. The duration of the transformed second target data sequence is equal to the OFDM symbol length of the transformed second target data sequence.

According to an embodiment, FIG. 15 illustrates by way of example, the relationship between waveform modulation performed on the second data sequence, and the frequency domain bandwidths allocated to the second data sequence, the second target data sequence, the second header sequence, and the second trailer sequence. First, the second header sequence S2' is inserted to the leading end of the second data sequence, and the second trailer sequence S1' is inserted to the trailing end of the second data sequence to form the second target data sequence. In this case, the time domain length of the second target data sequence is equal to the OFDM symbol length. The number of points of the second Discrete Fourier Transform (DFT) is set to the number of data elements in the second target data sequence before performing the DFT. The number of points of the second Inverse Fast Fourier Transform (IFFT) is set to be greater than the number of points of the second DFT. That is, zero subcarriers are added to the frequency domain data after performing the second DFT on the second target data sequence, and then an oversampling IFFT is performed. Thus, the number of data elements of the transformed second target data sequence with the first IFFT is greater than the length of the second target data sequence before the first DFT processing. In this case, the time domain length of the transformed second target data sequence is also equal to the OFDM symbol length. The frequency domain bandwidth allocated to the transformed second target data sequence is equal to the frequency domain bandwidth allocated to the second data sequence. When the transmitted first target data sequence is obtained as shown in the figures, and if the frequency domain bandwidth allocated to the first data sequence is different from the frequency domain bandwidth allocated to the second data sequence, the frequency domain bandwidth allocated to the transformed first target data sequence and the transformed second target data sequence are also different.

As shown in FIG. 11, assuming the frequency domain bandwidths allocated to the first data sequence and the second data sequence include K1 and K2 subcarriers, with subcarrier spacings of Δf1 and △f2, respectively. In an example, K1 = 18, K2 = 36, △f1 = 15 kHz, and △f2= 30 kHz, the frequency domain bandwidths allocated to the first data sequence and the second data sequence are B1 = 18 × 15 kHz and B2 = 36 × 30 kHz, respectively. In this case, the frequency domain bandwidth allocated to the second data sequence is greater than the frequency domain bandwidth allocated to the first data sequence. Thus, the duration of the second header sequence S2' inserted to the leading end of the second data sequence is less than the duration of the sequence S2 inserted to the leading end of the first data sequence. The frequency domain bandwidth allocated to the second data sequence is four times the frequency domain bandwidth allocated to the first data sequence. Thus, the duration of the sequence S2' inserted to the leading end of the second data sequence is 1/4 of the duration of the first header sequence S2 inserted to the leading end of the first data sequence.

According to an embodiment, referring to FIG. 13, the second data sequence in FIG. 13 is data transmitted in the time domain, which means the second target data sequence is a time-domain data sequence. In this case, the time window/duration for the DFT performed on the time-domain data sequence is as shown in FIG. 14. In FIG. 13 and FIG. 14, the DFT is performed on the time-domain data sequence, and the time window of the DFT is the time window of the time-domain data sequence, that is, the duration of the DFT is the duration of the second target data sequence. The start point and the end point of the time window of the DFT are the start point and the end point of the time-domain data sequence, respectively.

Referring to FIG. 16, according to an embodiment, a wireless communication device is provided. The device includes at least one processor 101, and a storage device 102 storing at least one program thereon, which when executed by the processor, causes the processor 101 to carry out the method as described in any one of the embodiments discussed above.

The memory 102, serving as a non-transitory storage system, may be used to store non-transitory software programs and non-transitory computer-executable programs. In addition, the memory 102 can include high-speed random-access memory and non-transitory memory, such as at least one disk memory device, flash memory device, or other non-transitory solid-state memory devices. In some implementations, the memory 102 may include memories remotely located relative to the processor 101, and these remote memories 102 may be connected to the processor 101 through a network. Examples of the above networks include, but are not limited to, the Internet, intranet, local area network, mobile communication network, and combinations thereof.

The memory 102 may be implemented in the form of Read-Only Memory (ROM), a static storage device, a dynamic storage device, or Random-Access Memory (RAM), etc. The memory 102 may store the operating system and other programs. When the technical schemes described in the embodiments of the present specification are implemented in the form of software or firmware, the corresponding program code is stored in the memory 102 and invoked by the processor 101 to cause the processor 601 to execute the methods of the embodiments of the present disclosure.

The processor 101 may be implemented using a general-purpose central processing unit (CPU), a microprocessor, an application-specific integrated circuit (ASIC), or one or more integrated circuits, and is configured to execute programs for implementing the technical schemes described in the embodiments of the present disclosure.

In some embodiments, the wireless communication device further includes: an input/output interface, configured to implement information input and output; a communication interface, configured to implement communication interaction between the device and another device, via a wired communication (e.g., USB, network cable, etc.) or via a wireless communication (e.g., mobile network, WIFI, Bluetooth, etc.); and a bus, configured to transmit information between various components of the device (e.g., the processor 101, the memory 102, the input/output interface, and the communication interface). The processor 101, the memory 102, the input/output interface, and the communication interface can be connected for communication with each other inside the device via a bus.

According to an embodiment of the present disclosure, a computer-readable storage medium is provided. The computer-readable storage medium stores a computer-executable instruction which, when executed by a processor causes the processor to carry out the method as described in any one of the embodiments above.

According to an embodiment of the present disclosure, a computer program product is provided. The computer program product includes a computer program or a computer instruction stored in a computer-readable storage medium which, when executed by a processor of a computer device, causes the computer device to carry out the method as described in any one of the embodiments above.

The system architecture and application scenarios described in an embodiment of the present disclosure are intended for better understanding of rather than limitations to the technical scheme of various embodiments of the present disclosure. It is known to those having ordinary skills in the art that, with the evolution of the system architecture and the emergence of new application scenarios, the technical scheme provided by the embodiment of the present disclosure is also applicable to similar technical problems.

It shall be appreciated by a person having ordinary skills in the art that all or some of the operations and systems disclosed above can be implemented as software, firmware, hardware and their appropriate combinations. Some or all physical components can be implemented as software executed by a processor, such as a central processing unit, a digital signal processor or a microprocessor, or as hardware, or as an integrated circuit, such as an application specific integrated circuit. Such software can be distributed on computer-readable media, which can include computer storage media (or non-transitory media) and communication media (or transitory media). As is well known to a person having ordinary skills in the art, the term computer storage medium includes volatile and nonvolatile, removable and non-removable medium implemented in any method or technology for storing information such as computer-readable instructions, data structures, program modules or other data. Computer storage medium includes, but is not limited to, RAM, ROM, EEPROM, flash memory or other memory technologies, CD-ROM, digital versatile disks (DVD) or other optical disk storage, magnetic boxes, tapes, magnetic disk storage or other magnetic storage devices, or any other medium that can be configured to store desired information and accessible by a computer. Furthermore, it is well known to those having ordinary skills in the art that communication media usually contains computer-readable instructions, data structures, program modules or other data in modulated data signals such as carrier waves or other transmission mechanisms, and can include any information delivery media.

Some embodiments of the embodiments of the present disclosure are illustrated above in conjunction with the drawings, and the present disclosure are not limited thereto. Any modifications, equivalents, alternations, or improvements, made within the scope of the present disclosure shall be included in the scope of the present disclosure.

## Claims

1. A method for data transmission, comprising:
acquiring a first data sequence and a second data sequence, wherein the first data sequence and the second data sequence are allocated with different frequency domain bandwidths;
adding a first header sequence to a leading end of the first data sequence, and adding a first trailer sequence to a trailing end of the first data sequence to form a first target data sequence;
adding a second header sequence to a leading end of the second data sequence, and adding a second trailer sequence to a trailing end of the second data sequence to form a second target data sequence; and
transmitting the first target data sequence and the second target data sequence;
where the first trailer sequence and the second trailer sequence have different data lengths, and the first header sequence and the second header sequence have identical data length.

2. The method according to claim 1, wherein transmitting the first target data sequence and the second target data sequence, comprising:
transmitting the first target data sequence via a first frequency domain resource; and
transmitting the second target data sequence via a second frequency domain resource;
wherein a frequency domain bandwidth corresponding to the first frequency domain resource is different from a frequency domain bandwidth corresponding to the second frequency domain resource.

3. The method according to claim 1, wherein the first header sequence and the second header sequence contain same number of data elements, and the first trailer sequence and the second trailer sequence contain different number of data elements.

4. The method according to claim 1, wherein first header sequence and the second header sequence are identical sequences, and the first trailer sequence and the second trailer sequence are different sequences.

5. The method according to claim 1, wherein the first header sequence and the second header sequence have different durations, and the first trailer sequence and the second trailer sequence have same or different durations.

6. The method according to claim 1, wherein a ratio of duration of the first header sequence to duration of the second header sequence is equal to a reciprocal of a ratio of frequency domain bandwidth allocated to the first data sequence to frequency domain bandwidth allocated to the second data sequence.

7. The method according to claim 1, wherein the first data sequence and the second data sequence have same or different durations.

8. The method according to claim 1, wherein frequency domain bandwidth allocated to the first data sequence is greater than frequency domain bandwidth allocated to the second data sequence, and the first header sequence has shorter duration than the second header sequence.

9. The method according to claim 1, wherein the larger the frequency domain bandwidth allocated to the first data sequence, the shorter the duration of the first header sequence is.

10. The method according to claim 1, wherein the larger the frequency domain bandwidth allocated to the second data sequence, the shorter the duration of the second header sequence is.

11. The method according to claim 1, wherein the first target data sequence and the second target data sequence have a same duration, and the first target data sequence and the second target data sequence contain different data elements.

12. The method according to claim 1, wherein the first target data sequence and the second target data sequence have a same duration, and the first target data sequence and the second target data sequence contain same or different data elements.

13. The method according to claim 1, wherein the shorter the duration of the first header sequence, the more data elements the first target data sequence contains; and
the shorter the duration of the second header sequence, the more data elements the second target data sequence contains.

14. The method according to claim 1, wherein a ratio of duration of the first target data sequence to duration of the second target data sequence is equal to a reciprocal of a ratio of a subcarrier spacing of frequency domain bandwidth allocated to the first data sequence to a subcarrier spacing of frequency domain bandwidth allocated to the second data sequence.

15. The method according to claim 1, wherein when the subcarrier spacings of the frequency domain bandwidths allocated to the first data sequence and the second data sequence are identical, the first target data sequence and the second target data sequence have identical duration;
or,
when the subcarrier spacings of the frequency domain bandwidths allocated to the first data sequence and the second data sequence are different, the first target data sequence and the second target data sequence have different durations.

16. The method according to claim 1, wherein the first target data sequence and the second target data sequence have a same duration, and the first target data sequence and the second target data sequence contain different data elements;
or,
the first target data sequence and the second target data sequence have a same duration, and the first target data sequence and the second target data sequence contain same or different data elements.

17. The method according to claim 1, wherein a duration of the first trailer sequence is determined according to a terminal device delay requirement corresponding to the first data sequence; and
a duration of the second trailer sequence is determined according to a terminal device delay requirement corresponding to the second data sequence.

18. The method according to claim 1, wherein, the first header sequence is a reference signal sequence or a sequence known to a network device;
the second header sequence is a reference signal sequence or a sequence known to a network device;
the first trailer sequence is a reference signal sequence or a sequence known to a network device; and
the second trailer sequence is a reference signal sequence or a sequence known to a network device.

19. The method according to claim 1, wherein transmitting the first target data sequence, comprises:
successively performing a first Fourier transform and a first inverse Fourier transform to the first target data sequence, to acquire a transformed first target data sequence and transmit the transformed first target data sequence;
wherein, a length of time window of the first Fourier transform is equal to a duration of the first target data sequence, and temporal start and end points of the first Fourier transform correspond to temporal start and end points of the first target data sequence;
the first inverse Fourier transform contains a greater number of points than the first Fourier transform, and the transformed first target data sequence contains greater number of data elements than the first target data sequence; and
a duration of the first target data sequence equals to a length of Orthogonal Frequency Division Multiplexing (OFDM) symbols contained in the first target data sequence, and a duration of the transformed first target data sequence equals to a length of OFDM symbols contained in the transformed first target data sequence.

20. The method according to claim 1, wherein transmitting the second target data sequence, comprises:
successively performing a second Fourier transform and a second inverse Fourier transform to the second target data sequence, to acquire a transformed second target data sequence and transmit the transformed second target data sequence;
wherein, a length of time window of the second Fourier transform is equal to a duration of the second target data sequence, and temporal start and end points of the second Fourier transform correspond to temporal start and end points of the second target data sequence;
the second inverse Fourier transform contains a greater number of points than the second Fourier transform, and the transformed second target data sequence contains greater number of data elements than the second target data sequence; and
a duration of the second target data sequence equals to a length of OFDM symbols contained in the second target data sequence, and a duration of the transformed second target data sequence equals to a length of OFDM symbols contained in the transformed second target data sequence.

21. A wireless communication device, comprising:
at least one processor; and
at least one memory configured to store a program which, when executed by the at least one processor, causes the at least one processor to carry out the method as claimed in any one of claims 1 to 20.

22. A computer-readable storage medium storing a computer-executable instruction which, when executed by a processor, causes the processor to carry out the method according to any one of claims 1 to 20.

23. A computer program product, comprising a computer program or a computer instruction stored in a computer-readable storage medium which, when executed by a processor of a computer device, causes the computer device to carry out the method according to any one of claims 1 to 20.
